# EUROPÄISCHE PATENTANMELDUNG

(11) **EP 0 959 583 A2**
(43) Veröffentlichungstag der Anmeldung: **24.11.1999**
(21) Anmeldenummer: 99103440.6
(22) Anmeldetag: 23.02.1999
(51) Int. Cl.: H04L 1/12

(54) **Anordnung zum Optimieren der Datenübertragung über einen bidirektionalen Funkkanal**

(30) Priorität: 25.02.1998 DE 19807931
(71) Anmelder: Rohde & Schwarz GmbH & Co. KG, D-81671 München (DE)
(72) Erfinder: Dirschedl, Werner, 81245 München (DE); Riek, Rainer, 85646 Neufarn (DE); Greiner, Günter, 81669 München (DE)
(74) Vertreter: Graf, Walter, Dipl.-Ing.

(57) **Zusammenfassung**

Zum Optimieren der Datenübertragung über einen bidirektionalen Funkkanal, bei der in jeder der beiden Sende/Empfangs-Stationen die zu sendenden digitalen Daten nach einem Datenübertragungsprotokoll in einzelne Datenpakete aufgeteilt werden, wird in jeder Sende/Empfangs-Station die Anzahl und/oder die Länge und/oder die Priorität und/oder die Art (z.B. Information, Kontroll/Steuerungszeichen, Wiederholungsblöcke) der durch das Datenübertragungsprotokoll der höheren Ebene erzeugten und zum jeweiligen Sender der Station übertragenen Datenpakete bestimmt (Datenpaketkennungen); in Abhängigkeit davon wird dann das Datenübertragungsprotokoll in mindestens einer der Stationen im Sinne einer optimalen Nutzung der Funkkanalkapazität ausgewählt.

## Beschreibung

Die Erfindung betrifft und geht aus von einer Anordnung laut Oberbegriff des Hauptanspruches.

Zur Übertragung von digitalen Daten, wie digitalisierte Sprache oder andere digitale Informationen über einen in beiden Übertragungsrichtungen (bidirektionalen) Kurzwellen-Funkkanal ist es bekannt, die zu übertragenden digitalen Daten, die abwechselnd in Hin- und Rückrichtung über den Funkkanal übertragen werden, nach einem vorgegebenen Datenübertragungsprotokoll, im folgenden DÜP genannt, aufzubereiten und dabei in einzelne Datenpakete aufzuteilen (z.B. nach A.S. Tanenbaum, Computer Networks, Prentice-Hall, Englewood Cliffs, 1981, Seiten 136 ff). Dabei können diese zu übertragenden digitalen Daten auch schon vorher in einer höheren Ebene nach einem anderen Datenübertragungsprotokoll, im folgenden DÜPHE genannt, aufbereitet sein, beispielsweise nach dem bekannten TCP/IP (Transmission Control Protocol/Internet Protocol)-Protokoll. Zum Optimieren der Datenübertragung über einen solchen bidirektionalen Funkkanal wurde auch schon vorgeschlagen, die Bitfehlerrate empfangsseitig zu messen und an den Sender zurückzuübertragen und dort in Abhängigkeit davon u.a. die Länge der Datenpakete entsprechend zu ändern (ältere Patentanmeldung 196 51 593.9).

Je nach Art der zu übertragenden digitalen Daten und des diese aufbereitenden Datenübertragungsprotokolls der höheren Ebene, z.B. TCP/IP (DÜPHE), können die anfallenden Datenpakete und Quittungen in beiden Übertragungsrichtungen sehr unterschiedliche Länge und Häufigkeit aufweisen und es kann damit selbst bei Anwendung der erwähnten Optimierung der Datenübertragung mit dem DÜP zu erheblichen Beeinträchtigungen des Datendurchsatzes kommen.

Es ist daher Aufgabe der Erfindung, eine Anordnung zum Optimieren der Datenübertragung über einen bidirektionalen Funkkanal zu schaffen, bei der die zur Verfügung stehende bidirektionale Kanalkapazität jeweils an die in beiden Richtungen anfallenden Datenaufkommen optimal angepaßt ist.

Diese Aufgabe wird ausgehend von einer Anordnung laut Oberbegriff des Hauptanspruches durch dessen kennzeichnende Merkmale gelöst. Vorteilhafte Weiterbildungen ergeben sich aus den Unteransprüchen.

Gemäß der Erfindung werden vor der Aussendung der Datenpakete der DÜP die Datenpaketkennungen der DÜPHE laut Hauptanspruch, also die Anzahl und/oder Länge und/oder Priorität und/oder Art der Datenpakete ermittelt und in Abhängigkeit davon die Länge der Datenpakete der DÜP eingestellt. Dabei sind die verschiedenartigsten Kombinationsmöglichkeiten für diese Datenpaketkennungen denkbar. Im einfachsten Fall kann es ausreichen, nur die momentane bzw. zu erwartende Anzahl der Datenpakete zu ermitteln. Besser wird die Anpassung, wenn zusätzlich auch noch die momentane bzw. zu erwartende Länge der Datenpakete der zu übertragenden Daten als Kennung mit berücksichtigt wird. Noch besser ist es, auch noch die momentane bzw. zu erwartende Priorität der vom DÜPHE in das DÜP einlaufenden Datenpakete zu ermitteln bzw. die momentane bzw. zu erwartende Art (Information, Quittung, Steuerbefehle od.dgl.). Eine weitere Kennung kann die jeweilige Aktualität der Datenpakete der DÜPHE sein, beispielsweise die Information darüber, daß es sich um ein Wiederholungspaket handelt. Diese quantitative Erfassung der Datenpaketkennungen erfolgt auf beiden Seiten der Funkstrecke und aus diesen Kennungen können dann die Parameter des Datenübertragungsprotokolls DÜP im Sinne einer optimalen Nutzung der Funkkanalkapazität eingestellt werden. Als besonders vorteilhaft hat es sich dabei erwiesen, die Länge der Datenpakete entsprechend zu beeinflussen und damit auch die Häufigkeit, mit der zwischen den beiden Richtungen des Funkkanals umgeschaltet wird.

Die Erfindung wird im folgenden anhand einer schematischen Zeichnung an einem Ausführungsbeispiel näher erläutert.

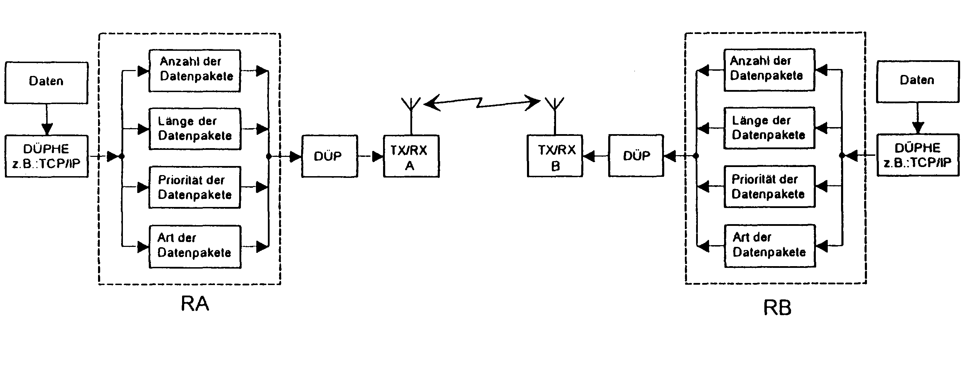

Die Figur zeigt das Prinzipschaltbild einer bidirektionalen Kurzwellenverbindung zwischen einer Sende/Empfangs-Station A und einer Sende/Empfangs-Station B. Die zu übertragenden digitalen Daten werden durch ein Datenübertragungaprotokoll (DÜPHE) z.B. TCP/IP in einzelne Pakete aufgeteilt, die nacheinander über einen Radiotreiber RA dem Datenübertragungsprotokoll DÜP des eigentlichen Senders der Station A zugeführt und über den Funkkanal zur Gegenstation B übertragen und im dortigen Empfänger mit dessen DÜP ausgewertet werden. Im Sendebetrieb der Gegenstation B werden in gleicher Weise die zu übertragenden digitalen Daten aufbereitet und über einen Radiotreiber RB dem DÜP des Senden der Station B zugeführt und über den Funkkanal zur Station A übertragen. Die jeweils von den DÜP erzeugten Pakete können sich beispielsweise aus einer variablen Anzahl von Rahmen zusammensetzen, die Anzahl der Rahmen pro Paket kann von der Güte der Funkverbindung abhängen und beispielsweise zwischen 1 und 15 liegen. Jeder Rahmen kann seinerseits aus einem beispielsweise 5 Byte langen Header aus Kontroll- und Steuerinformationen, einem anschließenden beispielsweise zwischen 4 und 250 Byte langem Datenanteil und einem beispielsweise 2 Byte langen Redundanzcode (CRC) bestehen. Durch Wahl der Datenmenge je Rahmen und Wahl der Anzahl der Rahmen in einem Paket kann somit senderseitig in jeder Station A und B die Paketlänge des DÜP beliebig, beispielsweise zwischen 64 Byte und 8 kByte gewählt werden.

Von den aus den DÜPHE in den Radiotreiber RA bzw. RB einlaufenden Datenpaketen wird nun die Anzahl, die Länge, die Priorität bzw. die Art (Kontroll- oder Steuerinformation, Dateninformation, Quittungen etc.) ermittelt und in Abhängigkeit von diesen Kenngrößen wird das Datenübertragungsprotokoll DÜP, mit dem die zu übertragenden Datenpakete vor ihrem Aussenden über den Sender der Station A noch einmal in einzelne Datenpakete aufgeteilt werden, entsprechend eingestellt. Wird beispielsweise in dem Radiotreiber RA eine Anzahl von zu übertragenden kurzen Datenpaketen von z.B. 100 Byte festgestellt, so wird die Länge der über das Datenübertragungsprotokoll DÜP erzeugten Datenpakete auf diese Länge eingestellt. Laufen in den Radiotreiber z.B. einige lange Pakete von beispielsweise einigen Kilobyte, so werden die Pakete DÜP so weit verlängert, wie es das Datenaufkommen der Gegenstation und die momentane Kanalqualität erlauben.

## Patentansprüche

1. Anordnung zum Optimieren der Datenübertragung über einen bidirektionalen Funkkanal, bei der in jeder der beiden Sende/Empfangs-Stationen die zu sendenden digitalen Daten nach einem Datenübertragungsprotokoll in einzelne Datenpakete aufgeteilt werden,
**dadurch gekennzeichnet,**
daß in jeder Sende/Empfangs-Station (A bzw. B)
die Anzahl
und/oder die Länge
und/oder die Priorität
und/oder die Art (z.B. Information, Kontroll/Steuerungszeichen, Wiederholungsblöcke) der durch das Datenübertragungsprotokoll der höheren Ebene (DÜPHE) erzeugten und zum jeweiligen Sender der Station übertragenen Datenpakete bestimmt wird (Datenpaketkennungen) und in Abhängigkeit davon das Datenübertragungsprotokoll (DÜP) in mindestens einer der Stationen im Sinne einer optimalen Nutzung der Funkkanalkapazität gewählt wird.

2. Anordnung nach Anspruch 1,
**dadurch gekennzeichnet,**
daß in Abhängigkeit von den Datenpaketkennungen jeweils die Länge der durch das Datenübertragungsprotokoll (DÜP) erzeugten Datenpakete bestimmt wird.

3. Anordnung nach Anspruch 1 oder 2,
**dadurch gekennzeichnet,**
daß in der einen Station (z.B. A) die Datenpaketkennungen bestimmt werden und in Abhängigkeit davon die Datenpaketlänge in der gleichen Station (z.B. A) im Sinne einer optimalen Funkkanalkapazitätsnutzung bestimmt wird.

4. Anordnung nach Anspruch 1 oder 2,
**dadurch gekennzeichnet,**
daß die in der einen Station (z.B. A) bestimmten Datenpaketkennungen zur Gegenstation (z.B. B) übertragen werden und dort zur Beeinflussung der Datenpaketlänge des Datenübertragungsprotokolls (DÜP) benutzt werden.

5. Anordnung nach einem der vorhergehenden Ansprüche,
**dadurch gekennzeichnet,**
daß die in den beiden Stationen (A und B) bestimmten Datenpaketkennungen zur jeweiligen Gegenstation übertragen werden und dort zur Einstellung der Länge der Datenpakete des Datenübertragungsprotokolls (DÜP) benutzt werden.
